# EUROPÄISCHE PATENTANMELDUNG

(11) **EP 1 626 098 A2**
(43) Veröffentlichungstag der Anmeldung: **15.02.2006**
(21) Anmeldenummer: 05016816.0
(22) Anmeldetag: 02.08.2005
(51) Int. Cl.: C22B 19/00, C22B 3/12, C22B 7/00, C23F 1/32, C23F 1/44

(54) **Verfahren zur Auflösung von Zink in Laugen**

(30) Priorität: 09.08.2004 DE 102004038650
(71) Anmelder: Coutelle, Rainer, 80799 München (DE)
(72) Erfinder: Coutelle, Rainer, 80799 München (DE)

(57) **Zusammenfassung**

Die Geschwindigkeit der Auflösung von Zink in Natronlauge oder Kalilauge ist insbesondere bei niedrigen Temperaturen im Bereich der Raumtemperatur sehr klein und nimmt mit zunehmendem Zinkgehalt stark ab. Durch Zugabe von Eisensulfid, das vorzugsweise mit dem aufzulösenden Zink durch Berührung in direktem oder indirekten elektrischen Kontakt steht, wird die Zinkauflösung insbesondere bei höheren Zinkgehalten in der Lauge erheblich beschleunigt. Wichtige Anwendungsgebiete sind z. B. die Auflösung von Zink bei der galvanischen alkalischen Verzinkung mit cyanidfreien Elektrolyten und die Ablösung von Zink von Stahlteilen, die mit zinkhaltigen Beschichtungen versehen sind.

## Beschreibung

Die Erfindung betrifft ein Verfahren zur schnellen Auflösung von Zink in wäßrigen, alkalischen Lösungen.

Zink wird in großen Mengen in wäßrigen, alkalischen Lösungen aufgelöst. Als Beispiele seien angeführt:
- Die anodische Auflösung von Zinkpellets in Anodenkörben bei der galvanischen Verzinkung in alkalischen Elektrolyten.
- Die chemische Auflösung von Zinkpellets in separaten Löseabteilen bei der galvanischen Legierungsverzinkung in alkalischen Elektrolyten.
- Die Entzinkung von fehlerhaft verzinkten Stahlteilen, Gestellhaken etc. in Natronlauge.
- Die Entzinkung von verzinktem Schrott in Natronlauge zum Zwecke der Zinkrückgewinnung und der Wertsteigerung des Schrotts.

Von besonderem Vorteil bei dieser Art der Zinkauflösung ist, daß hierbei selbst bei sehr langen Expositionszeiten Stahl weder anodisch noch chemisch angegriffen wird.

Die Auflösung von Zink in wäßrigen, alkalischen Lösungen weist jedoch zwei schwerwiegende Nachteile auf: die bei Raumtemperatur sehr langsame Auflösung des Zinks und die mit zunehmendem Zinkgehalt der Lauge schnell abnehmende Geschwindigkeit der Zinkauflösung. Zink ist ein unedleres Element als Wasserstoff; es sollte sich daher im Alkalischen schnell unter Bildung von löslichem Zinkat und Freisetzung von Wasserstoff lösen:

Zn⁰ + 2H₂O + 2OH⁻ → [Zn(OH)₄]²⁻ + H₂↑ (1)

Diese Reaktion setzt sich aus einer anodischen Oxidation

Zn⁰ + 4OH⁻ → [Zn(OH)₄]²⁻ + 2e⁻ (2)

und einer kathodischen Reduktion

2 H₂O + 2e⁻ → H₂↑ + 2OH⁻ (3)

zusammen. Zinkauflösung und Wasserstoffentwicklung laufen daher immer parallel und mit gleicher Geschwindigkeit ab. Die niedrige Auflösungsgeschwindigkeit des Zinks hat ihre Ursache in der hohen Überspannung der Wasserstoffentwicklung an Zinkoberflächen und daraus folgend einer entsprechenden Hemmung dieses Prozesses.

Eine naheliegende Maßnahme zur Beschleunigung der Zinkauflösung ist es daher, das aufzulösende Zink in elektrisch leitenden Kontakt mit Materialien zu bringen, an denen die Wasserstoffentwicklung ungehemmt ablaufen kann und die von den zur Zinkauflösung eingesetzten.alkalischen Lösungen nicht angegriffen werden. Es ist seit langem bekannt, daß Stahl diese Bedingungen erfüllt. In galvanischen Betrieben werden daher üblicherweise Teile mit fehlerhafter Zinkbeschichtung sowie das in separaten Löseabteilen aufzulösende Zink in Stahlkörbe gefüllt und in diesen Körben in die alkalische Lösungen untergetaucht. Wegen des direkten elektrischen Kontaktes zwischen dem aufzulösenden Zink und dem Korb entwickelt sich die dem aufgelösten Zink entsprechende Wasserstoffmenge dann nicht an der Zinkoberfläche, sondern am Korb. Außer Stahl eignen sich auch Platin, Palladium, Gold, Silber und die bei der alkalischen Wasserelektrolyse eingesetzten Kathodenmaterialien, insbesondere Materialien mit hoher spezifischer Oberfläche. In der Patentschrift US 5,302,260 werden als besonders geeignet genannt: Raney-Nickel, Raney-Kobalt, Nickelmolybdat, Nickelsulfid, Nickel-Kobalt Thiospinelle und Mischsulfide, Nickel-Aluminium-Legierungen und galvanisch abgeschiedenes Kobalt mit hoher spezifischer Oberfläche. In der Offenlegungsschrift DE 197 11 717 A1 werden Nickel und Kobalt, deren Legierungen sowie Oxide und Mischoxide und Kobalt- oder Nickelphthalocyanin als besonders geeignet zur Beschleunigung der Auflösung unedler Metalle wie Zink beschrieben. Besonders vorteilhaft ist der Einsatz matt vernickelter Stahlkörbe, die zur Erhöhung der spezifischen Oberfläche sandgestrahlt werden. Bei der Entzinkung von verzinktem Stahlschrott in Natron- oder Kalilauge kann die Zinkauflösung nach der Lehre der US 5,779,878 dadurch erhöht werden, daß dem zu entzinkenden Schrott unverzinkter Schrott zugemischt wird, daß die Zinkschicht vor der Entzinkung mechanisch verletzt wird oder daß der Schrott vor der Entzinkung auf mindestens 470 °C erhitzt wird, um die Zinkschicht bis zur Oberfläche in eine Zink-Eisen-Legierung umzuformen. Durch diese Maßnahmen wird der Anteil freier Stahloberflächen, an denen sich ungehemmt Wasserstoff entwickeln kann, vergrößert.

Einige der zur Beschleunigung der Zinkauflösung einsetzbaren Materialien sind, wie z.B. die Edelmetalle, zu teuer, andere wie Raney-Nickel, Raney-Kobalt oder andere Materialien mit besonders großer spezifischer Oberfläche sind empfindlich gegen Verunreinigungen. Insbesondere bei Zinkgehalten über 10 g/l in der alkalischen Lösung reicht der elektrische Kontakt zwischen dem aufzulösenden Zink und dem zur Beschleunigung der Zinkauflösung eingesetzten Material mit geringer Wasserstoffüberspannung als Einzelmaßnahme allein in den meisten Anwendungsfällen nicht aus, um die Zinkauflösung im erwünschten Maße zu beschleunigen. Zur weiteren Beschleunigung der Zinkauflösung wird nach der Lehre der US 5,779,878 die Entzinkung von Stahlschrott in mindestens 30 %-iger Natronlauge bei zusätzlich mindestens 85 °C durchgeführt. Von Nachteil sind hierbei die hohen Wärme- und Verdunstungsverluste. Bei der Auflösung von Zink in separaten Löseabteilen für die galvanische Verzinkung mit cyanidfreien alkalischen Elektrolyten muß zur Zinkauflösung der gleiche Elektrolyt bei der gleichen Temperatur verwendet werden wie bei der Zinkabscheidung, d.h. die Natronlaugekonzentration liegt üblicherweise im Bereich von 70 bis 140 g/l, die Zinkkonzentration im Bereich von 4 bis 16 g/l, und die Elektrolyttemperatur liegt in der Nähe der Raumtemperatur im Bereich von 23 bis 38 °C.

Eine weitere Beschleunigung der Zinkauflösung von verzinktem Stahlschrott in Natron- oder Kalilauge wird nach der Lehre der US 5,302,261 erreicht durch das Anlegen einer Gleichspannung von bis zu etwa 2 V zwischen dem als Anode geschalteten Stahlschrott und einer vom Schrott durch den Elektrolyten getrennten Kathode aus einem beständigen Material mit niedriger Wasserstoffüberspannung. Bei einem Potentialunterschied bis zu etwa 2 V wird an der inerten Kathode kein Zink abgeschieden, sondern nur Wasserstoff entwickelt. Diese Methode ist nicht nur, wie in der US 5,302,261 beschrieben, für die Entzinkung von verzinktem Stahlschrott, sondern auch für die Auflösung des Zinks in Löseabteilen galvanischer Verzinkungsanlagen geeignet. Von Nachteil ist der Bedarf an elektrischer Energie zur Beschleunigung der Zinkauflösung.

Eine weitere Möglichkeit, die Auflösung von Zink in Natronlauge oder Kalilauge zu beschleunigen, ist die Zugabe von Oxidationsmitteln. Die Zugabe von Ozon oder Wasserstoffperoxid ist für diesen Zweck mit zu hohen Kosten verbunden, und die Zugabe von Chlorbleichlauge oder, wie in der US 5,106,467 vorgeschlagen, von Nitraten z.B. Natriumnitrat, hätte eine unerwünschte Anreicherung von Fremdionen in der Lauge zur Folge.

Aufgabe der Erfindung ist die Beschleunigung der Auflösung von Zink in Natron- oder Kalilauge durch eine Maßnahme, die sowohl allein als auch in Kombination mit anderen bekannten Maßnahmen zur Beschleunigung der Zinkauflösung erfolgreich eingesetzt werden kann.

Diese Aufgabe wird durch das im Hauptanspruch angegebene Merkmal einer Zugabe von Eisensulfiden, vorzugsweise Eisen(II)sulfid FeS, gelöst. Bei Kontakt zwischen Eisensulfid und Zink entwickelt sich am Eisensulfid lebhaft Wasserstoff, während Zink in der Natron- oder Kalilauge in Lösung geht. Die Auflösung von Zink in Lauge beschleunigt sich sogar erheblich nach kurzer Zeit allein durch die Anwesenheit von Eisensulfid in der Lauge. Diese Beschleunigung der Zinkauflösung in Laugen ist überraschend, da das Löslichkeitsprodukt von FeS zwar sehr klein ist, nämlich 3,7 x 10⁻¹⁹ Mol²/l², aber um etwa 4 Größenordnungen größer als das von Zinksulfid mit 1,1 x 10⁻²⁴ Mol²/l². Es ist daher zu erwarten, daß Eisensulfid langsam in Lösung geht und die entsprechende Menge Zinksulfid aus der Lösung ausgefällt wird, bzw. daß sich das aufzulösende Zink mit einer unlöslichen Zinksulfidschicht überzieht. Zudem sollte wegen der hohen Konzentration an Hydroxidionen Eisen als Hydroxid ausfallen. Die in der Galvanotechnik übliche Reinigung cyanidischer Zinkbäder durch Zugabe von Natriumsulfid (Na₂S) zur Ausfällung störender Fremdmetallionen als Sulfide ist bei cyanidfreien alkalischen Zinkbädern nicht möglich, da hierbei Zinksulfid ausgefällt würde. Überraschenderweise wurde gefunden, daß die Zinkauflösung durch Zugabe von Eisensulfid stark beschleunigt wird. Eine Ausfällung von Zinksulfid konnte dagegen nicht festgestellt werden. Dies läßt sich vermutlich damit erklären, daß das Zink fast ausschließlich als Zinkation Zn(OH)₄²⁻ und nicht als Zinkion Zn²⁺ gelöst ist und daß Zinksulfid zur Ausbildung kolloider Lösungen neigt, Eisensulfid aber nicht. Eine besondere Reinheit des zugesetzten Eisensulfids ist nicht erforderlich, eine möglichst preiswerte Zugabe, z.B. in technischer Qualität, ist daher von Vorteil.

Für eine wirksame Beschleunigung der Zinkauflösung ist es von Vorteil, daß die bei der Zinkauflösung im Zink verbleibenden Elektronen ungehindert auf das Eisensulfid übergehen können. Das kann z.B. direkt über Kontaktstellen zwischen Zink und Eisensulfid erfolgen. Auch indirekte Kontakte reichen dafür aus, z.B. vom Zink zum Metall des Behälters, in dem das aufzulösende Zink bzw. der zu entzinkende Stahlschrott untergebracht ist, und vom Behälter auf das zugegebene Eisensulfid. Möglichst geringe elektrische Widerstände für die Übertragung von Elektronen vom aufzulösenden Zink auf das zugegebene Eisensulfid sind von Vorteil. Zur Beschleunigung der Auflösung von Zink in separaten Löseabteilen für die galvanische Verzinkung mit cyanidfreien, alkalischen Elektrolyten kann das zugegebene Eisensulfid direkt mit dem aufzulösenden Zink vermischt werden. Für die Entzinkung von verzinktem Stahlschrott wäre eine Vermischung des zugegebenen Eisensulfids mit dem Schrott für eine möglichst schnelle Entzinkung ebenfalls von Vorteil, wäre aber mit dem Nachteil verbunden, daß nach der Entzinkung das zugegebene Eisensulfid mit mehr oder weniger großem Aufwand vom entzinktem Schrott getrennt werden müßte. Sollte dieser Aufwand zur Trennung des entzinkten Schrottes vom zugegebenen Eisensulfid zu groß sein, kann die Beschleunigung der Entzinkung auch über einen indirekten Kontakt zwischen dem Schrott und dem Eisensulfid erfolgen, in dem z.B. der Schrott in einem metallischen, korbartigen Behälter in das Entzinkungsbecken mit Natron- oder Kalilauge eingetaucht und auf das zugegebene, am Boden des Entzinkungsbeckens befindliche Eisensulfid aufgesetzt wird.

Die Löslichkeit von Eisensulfid ist zwar sehr gering, sie führt aber in kurzer Zeit zur Bildung von Eisensulfid an freien Eisen- und Stahloberflächen. Bereits bei der Entzinkung von verzinktem Stahlschrott ist der Schrott nach dem Spülen und Trocknen teilweise bräunlich verfärbt. Diese Stellen enthalten Eisensulfid, wie man durch den schwachen, aber deutlich erkennbaren charakteristischen Geruch von H₂S beim Abreiben mit Säure nachweisen kann. Wird der zu entzinkende Schrott bzw. das aufzulösende Zink, wie es in Galvanikanlagen üblich ist, in Stahlkörben in die Natronlauge oder Kalilauge eingetaucht, dann bildet sich bei Zugabe von Eisensulfid zur Lauge an den Stahlkörben ebenfalls Eisensulfid. Werden vernickelte Stahlkörbe eingesetzt, wie in der Offenlegungsschrift DE 197 11 717 11 vorgeschlagen, so bildet sich in analoger Weise das sehr viel schwerer lösliche Nickelsulfid (L_{FeS} = 3,7 · 10⁻¹⁹ Mol²/l², L_{NiS} = 1,0 · 10⁻²⁶ Mol²/l² jeweils bei 20 °C), das nach der Lehre der US 5,302,260 ebenfalls die Zinkauflösung beschleunigt. Zur Beschleunigung der Zinkauflösung tragen sowohl die Vergrößerung der mit der Lauge in Kontakt stehenden Eisensulfidoberflächen bei als auch die Vergrößerung der spezifischen Oberfläche des Stahlkorbes und bei der Entzinkung von Schrott auch die Vergrößerung der spezifischen Oberfläche der bereits entzinkten Teile durch die Neubildung von Eisensulfid (was bei Zugabe von Nickelsulfid aufgrund der extrem geringen Löslichkeit nicht möglich ist). Von Vorteil ist es ferner, die Schrottentzinkung bzw. die Zinkauflösung in einem Stahlbecken durchzuführen und für einen sehr guten elektrischen Kontakt zum aufzulösenden Zink zu sorgen, z.B. durch großflächige Kontakte zwischen dem Becken und dem Stahlkorb mit dem aufzulösenden Zink oder dem zu entzinkenden Schrott. In diesem Fall bildet sich auch am Becken Eisensulfid neu und die Fläche, an der sich ungehemmt Wasserstoff entwickeln kann, wird viel größer mit der Folge einer weiteren Beschleunigung der Zinkauflösung.

Die Geschwindigkeit der Zinkauflösung nimmt mit zunehmendem Zinkgehalt der zur Zinkauflösung eingesetzten Natron- oder Kalilauge ab. Von Vorteil ist es daher, dafür zu sorgen, daß der Zinkgehalt in der Natron- bzw. Kalilauge in dem an dem aufzulösenden Zink angrenzenden Bereich nur wenig über den Zinkgehalt in weiter entfernten Bereichen ansteigt, mit anderen Worten dafür zu sorgen, daß die Natron- bzw. Kalilauge die im Korb befindliche Schüttung aus Zinkstücken bzw. verzinktem Schrott ohne wesentliche Behinderung durchströmt. Dazu muß der Korb hinreichend durchlässig sein. Dies ist z.B. der Fall, wenn der Korb aus einem Drahtnetz mit einer im Vergleich zur Drahtdicke großen Maschenweite gefertigt ist. In den meisten Fällen reicht bereits die durch die Wasserstoffentwicklung hervorgerufene Strömung der Lauge für eine ausreichende Durchmischung. Dies gilt insbesondere dann, wenn das zugegebene Eisensulfid mit dem aufzulösenden Zink bzw. dem zu entzinkenden Schrott vermischt wird.

Zink kann nur an den Stellen in Lösung gehen, an denen es mit der zur Lösung eingesetzten Lauge in Kontakt steht. Insbesondere bei flachen, beölten, verzinkten Blechstücken kann es vorkommen, daß die Blechstücke so fest aneinanderhaften, daß die Lauge nicht zwischen die Bleche fließen und die Zinkschicht ablösen kann. Eine kontinuierliche oder intermittierende Umwälzung des Schrottes während der Entzinkung ist daher in derartigen Fällen von Vorteil. Dies kann beispielsweise dadurch geschehen, daß der Schrott in schwenkbaren Körben oder drehbaren Trommeln entzinkt wird oder vor Beendigung der Entzinkung in weitere Körbe umgefüllt wird. Eine Umwälzung während der Schrottentzinkung ist auch dann von Vorteil, wenn die einzelnen Schrottteile untereinander nur kleinflächige und punktuelle Kontaktstellen aufweisen, wie es z.B. bei der Entzinkung von geschreddertem, aber nicht verdichtetem Schrott in der Regel der Fall ist. Die Entzinkung verläuft besonders schnell in der Nähe der Kontaktstellen der Zinkschicht mit dem zugegebenen Eisensulfid und den mit Eisensulfid überzogenen Stahlteilen des Korbes sowie den bereits entzinkten Bereichen des Schrottes. Falls der Schrott nicht mit Eisensulfid vermischt wird, schreitet daher bei fehlender Umwälzung des Schrottes die Entzinkung von den Randbereichen des Korbes ins Innere fort. Durch eine Umwälzung des Schrottes während der Entzinkung werden die für die Wasserstoffentwicklung katalytisch wirkenden, bereits entzinkten Stellen des Schrottes gleichmäßig im Schrott verteilt, so daß die Schrottentzinkung schneller beendet ist.

Durch die Zugabe von Eisensulfid, vorzugsweise FeS, werden in sehr geringer Menge S²⁻- und Fe²⁺-Ionen in die Natron- oder Kalilauge eingebracht. Dies ist sowohl bei der Auflösung von Zink in separaten Löseabteilen für die galvanische Verzinkung mit cyanidfreien, alkalischen Elektrolyten als auch bei der Entzinkung von Schrott von Vorteil. Die Zugabe von Sulfidionen ist ein in der galvanischen Verzinkung bewährtes Verfahren zur Badreinigung. Durch Zugabe von Sulfidionen, meist als Natriumsulfid, können einige die Qualität der galvanischen Zinkabscheidung beeinträchtigenden Schwermetallionen als Sulfide ausgefällt werden. Die bei Zugabe von FeS wegen des kleinen Löstichkeitsproduktes von FeS sich einstellende geringe Konzentration an freien S²⁻-Ionen stört die Zinkabscheidung nicht. Außerdem sind Fe²⁺-Ionen im Alkalischen ein starkes Reduktionsmittel, durch das z.B. sechswertiges Chrom zu dreiwertigem Chrom reduziert wird. Bei der galvanischen Verzinkung können Verschleppungen und Einträge durch Abtropfen aus zur Nachbehandlung der abgeschiedenen Zinkschicht eingesetzten Chromatierungen zu Verunreinigungen der Verzinkungsbäder mit 6-wertigem Chrom führen, das bereits in sehr geringen Konzentrationen die Qualität der Zinkabscheidung beeinträchtigt.

Dreiwertiges Chrom dagegen ist in weit höheren Konzentrationen tolerierbar. Auch für die Abwasserbehandlung ist die Reduktion von 6-wertigem zu 3-wertigem Chrom ein wichtiger Vorteil. Bei der Entzinkung von zinkhaltigem Schrott kann 6-wertiges Chrom durch die Auflösung chromatierter Zinkschichten oder die Auflösung von zinkhaltigen Korrosionsschutzanstrichen, die teilweise chromatierte Zinkpartikel enthalten, in geringen Mengen zu Verunreinigungen führen. Das in der Entzinkungslösung enthaltene Zink kann durch galvanische Abscheidung in metallischer Form zurückgewonnen werden. Für die weitere Verwendung ist die Reinheit des zurückgewonnenen Zinks von ausschlaggebender Bedeutung. Da durch die Zugabe von Eisen(II)sulfid ein Beitrag zur Reinhaltung der Zinkbäder erfolgt, ist die Zugabe von FeS sowohl bei der galvanischen Verzinkung mit cyanidfreien, alkalischen Elektrolyten als auch bei der Entzinkung von zinkhaltigem Schrott von Vorteil. Dies gilt auch für die Abwasserbehandlung bei beiden Verfahren. Fallen Sulfide aus und werden Fe²⁺-Ionen zu Fe³⁺-Ionen oxidiert, geht eine entsprechende Menge an FeS in Lösung. Wegen der sehr geringen Löslichkeit von FeS erfolgt die Reinigung sehr langsam.

Obwohl nur sehr geringe Mengen an Eisensulfid erforderlich sind, damit sich an allen, in die Natron- oder Kalilauge eintauchenden Stahlflächen Eisensulfid ablagern kann, ist es zweckmäßig, weit größere Mengen als minimal erforderlich zuzugeben, so daß Nachdosierungen mit FeS erst nach langen Zeiträumen erforderlich werden. Bei der Auflösung von Zink in separaten Löseabteilen für die galvanische Verzinkung mit cyanidfreien, alkalischen Elektrolyten ist es zweckmäßig, das Eisensulfid in Form von Stücken mit dem aufzulösenden Zink zu vermengen. Die Eisensulfidstücke sollten mindestens so groß sein, daß sie nicht durch die Maschen des Lösekorbes fallen können. Nach oben ist die Größe der zugegebenen Eisensulfidstücke durch die Abmessungen des Lösekorbs begrenzt, d.h. sie müssen zusammen mit dem aufzulösenden Zink in den Lösekorb eingebracht werden können. Bei der Entzinkung von zinkhaltigem Stahlschrott ist es zweckmäßig, das zugegebene Eisensulfid nicht mit dem Schrott zu vermischen. Das Eisensulfid kann z.B. auf dem Boden des Entzinkungsbeckens aus Stahl ausgebreitet werden und der Schrott in einem Stahlkorb auf das Eisensulfid aufgesetzt werden. Bei Verwendung von drehbaren Trommeln können Eisensulfidstücke in vom Schrott abgetrennten Käfigen z.B. an den Stirnseiten, oder entlang der Drehachse, untergebracht werden.

Bei der Auflösung von Zink in separaten Löseabteilen für die galvanische Verzinkung in cyanidfreien, alkalischen Elektrolyten ist das Zink in dem durch die Abscheidebedingungen festgelegten Elektrolyten bei vorgegebener Temperatur durchzuführen. Die Möglichkeit, durch weitere Maßnahmen die Zinkauflösung zu beschleunigen, sind daher stark eingeschränkt. Bei einer Erwärmung des Elektrolyten im Löseabteil zur Beschleunigung der Zinkauflösung müßte der Elektrolyt bei der Rückführung in das Abscheidebecken wieder auf die vorgeschriebene Temperatur abgekühlt werden. Durch das Anlegen einer Spannung bis zu etwa 2 V zwischen dem als Anode geschalteten Zink und einer Kathode aus einem Material mit niedriger Wasserstoffüberspannung kann, wie in der US 5,302,261 vorgeschlagen, die Zinkauflösung zusätzlich beschleunigt werden.

Bei der Entzinkung von zinkhaltigem Schrott sind die zu beachtenden Beschränkungen weit weniger einschneidend. Um Zink als Zinkat aufzulösen und um das Ausfallen von Zinkhydroxid bei bereits geringen Zinkkonzentrationen von einigen g/l Zink zu unterbinden, sind starke Laugen in Konzentrationen mit einem pH-Wert von mindestens etwa 13 erforderlich. Da die Lauge außerdem möglichst preiswert sein soll, stehen nur Natron- und Kalilauge zur Auswahl. Kalilauge ist zur Zinkauflösung und galvanischen Zinkabscheidung ähnlich gut geeignet wie Natronlauge, weist aber einen geringeren Wasserdampfdruck und eine höhere elektrische Leitfähigkeit auf, so daß eine Rückgewinnung des aufgelösten Zinks durch galvanische Abscheidung mit etwas geringerem Energieaufwand möglich ist. Trotzdem erscheint Natronlauge geeigneter. Natronlauge absorbiert das in der Luft enthaltene Kohlendioxid langsamer als Kalilauge und die Löslichkeit von Natriumcarbonat weist im Gegensatz zu Kaliumcarbonat einen sehr starken Temperaturgradienten auf, so daß das gebildete Natriumcarbonat bis auf einen geringen Rest durch Abkühlung auf etwa 0 °C ausgefällt werden kann, während Carbonat in Kalilauge z.B. als Calciumcarbonat ausgefällt und abfiltriert werden müßte. Wegen des höheren Atomgewichts des Kaliums und der schnelleren Absorption von Kohlendioxid in Kalilauge wird mehr Kalilauge benötigt, als bei Verwendung von Natronlauge gleicher molarer Konzentration. Da Kalilauge zudem teurer ist als Natronlauge, ist bei Verwendung von Kalilauge anstelle von Natronlauge mit erheblich höheren Kosten zu rechnen.

Je höher die Lauge konzentriert ist, um so mehr Zink kann als Zinkat in Lösung gehalten werden. Mit zunehmender Konzentration steigt auch die Geschwindigkeit der Zinkauflösung. Andererseits nimmt mit zunehmender Konzentration die Zähigkeit der Lauge zu und damit auch der Spülaufwand zum Entfernen der Lauge vom entzinkten Schrott. In der Regel liegen die für die Praxis geeigneten Konzentrationen im Bereich zwischen 1 und 10 Mol pro Liter. Es ist von Vorteil, die Konzentration der Lauge auf einen pH-Wert von maximal etwa 15,5 zu begrenzen, da bei höheren Konzentrationen auch Eisen in unter Umständen störenden Mengen gelöst werden kann. Dies gilt insbesondere dann, wenn zur Beschleunigung der Zinkauflösung zwischen dem verzinkten Schrott als Anode und einer inerten Kathode eine Spannung angelegt wird, da dann die Gefahr besteht, daß an bereits entzinkten Stellen Eisen als Ferration (FeO₄²⁻) mit hellvioletter Farbe in Lösung geht.

Soll das aufgelöste Zink galvanisch als Metall zurückgewonnen werden, ist eine möglichst hohe elektrische Leitfähigkeit des Elektrolyten von Vorteil. Bei Natronlauge und Kalilauge steigt die elektrische Leitfähigkeit bis zu einer Konzentration von etwa 6 mol/l an und nimmt bei weiterer Erhöhung der Konzentration wieder ab. Für eine möglichst energiesparende galvanische Abscheidung von Zink aus der Entzinkungslösung ist daher die Verwendung einer etwa 6-molaren Natron- oder Kalilauge von Vorteil. Bei dieser Konzentration führt der Anstieg der Zähigkeit auch bei Raumtemperatur nur zu einem geringfügig erhöhten Spülaufwand.

Durch Erhöhung der Temperatur der Entzinkungslösung kann die Geschwindigkeit der Zinkauflösung erheblich erhöht werden. Sowohl bei Natronlauge als auch bei Kalilauge führt eine Erhöhung der Temperatur um etwa 10 °C zu einer Verdoppelung der Geschwindigkeit der Zinkauflösung. Mit zunehmender Temperatur steigt der Energiebedarf wegen der stark anwachsenden Wärme- und Verdunstungsverluste überproportional stark an. Mit zunehmender Temperatur nimmt die Zähigkeit der Lauge ab und bei konstanter Temperatur nehmen der Dampfdruck der Lauge und damit auch die Verdunstungsverluste mit zunehmender Konzentration der Lauge ab. Man muß grundsätzlich mit hohen Verdunstungsverlusten rechnen, da der bei der Entzinkung entstehende Wasserstoff von der offenen Badoberfläche abgesaugt werden muß. Mit besonders hoch konzentrierter Natron- oder Kalilauge im Bereich von etwa 10 mol/l kann daher bei hoher Temperatur von ca. 80 °C besonders schnell entzinkt werden, ohne allzu hohe Verdunstungsverluste in Kauf nehmen zu müssen. Für Entzinkungen bei Raumtemperatur und knapp darüber liegenden Temperaturen sind derart hoch konzentrierte Lösungen wegen ihrer hohen Viskosität und dem dadurch bedingten höheren Spülaufwand des entzinkten Schrottes weniger geeignet. Niedriger konzentrierte Laugen wiederum sind für Entzinkungen bei höheren Temperaturen wegen der hohen Verdunstungsverluste weniger geeignet. Wird die Zinkauflösung bei erhöhter Temperatur durchgeführt, können die Wärmeverluste durch eine Abdeckung der Badoberfläche und eine Wärmedämmung des Laugenbehälters vermindert werden.

Die Energiekosten für die Entzinkung bei höheren Temperaturen können durch Nutzung von Abwärme erheblich gesenkt werden. Die wichtigste Abwärmequelle bei der Schrottentzinkung ist die Abwärme aus der, der Entzinkung meist nachgeschalteten, galvanischen Zinkabscheidung. Durch diese Abwärmequelle kann die Temperatur der Entzinkungslösung bei vertretbarem Aufwand allerdings nur moderat im Bereich von etwa 10 bis 20 K über die Raumtemperatur angehoben werden. Bei sachgerechter Ausgestaltung der Entzinkung können unter Zugabe von Eisensulfid bereits bei knapp über der Raumtemperatur liegenden Temperaturen ausreichend kurze Entzinkungszeiten realisiert werden.

Wie bei der galvanischen Verzinkung in cyanidfreien alkalischen Elektrolyten kann auch bei der Schrottentzinkung die Geschwindigkeit der Zinkauflösung nach der Lehre der US 5,302,261 durch das Anlegen einer geringen Spannung bis zu etwa 2 V zwischen dem als Anode geschalteten verzinkten Schrott und einer Kathode aus einem in Natron- bzw. Kalilauge beständigen Material mit geringer Wasserstoffüberspannung erhöht werden.

Um die mit Eisen und Eisen(II)sulfid erzielbaren Beschleunigungen der Zinkauflösung miteinander vergleichen können, wurden in gleich großen Erlenmeyerkolben etwa gleiche Volumina von Eisenpulver bzw. FeS-Pulver eingefüllt und etwa gleich große beidseitig feuerverzinkte Blechspiralen auf das Fe- bzw. FeS-Pulver aufgesetzt. Die Dicke der Zinkschicht betrug 10 µm. In der folgenden Tabelle sind beispielhaft einige Entzinkungszeiten für eine Entzinkung in 20 %-iger Natronlauge bei 40 °C für einige Zinkgehalte zusammengestellt.

**Tab. 1: Entzinkungszeiten von 10 µm dick beidseitig feuerverzinkten Stahlblechen in 20 %-iger Natronlauge bei 40 °C für verschiedene Zinkgehalte.**

| Zinkgehalt [g/l] | Entzinkungszeit in Stunden | |
|---|---|---|
| | Fe-Pulver | FeS-Pulver |
| 5 | ½ | ¼ |
| 20 | 3 | ¾ |
| 32 | 4 | 1 |
| 38 | 12 | 1 ½ |
| 44 | 23 | 2 |
| 100 | --- | 4 |

Wie bereits bekannt, steigt die Entzinkungszeit mit zunehmendem Zinkgehalt stark an. Die durch Zugabe von FeS erzielbare Verkürzung der Entzinkungszeit wird mit steigendem Zinkgehalt immer ausgeprägter. Während die Entzinkung mit Fe-Pulver unter diesen Bedingungen bereits bei einem Zinkgehalt von ca. 40 g/l praktisch zum Erliegen kommt, verläuft die Entzinkung mit FeS selbst bei einem Zinkgehalt von ca. 100 g/l noch ähnlich schnell wie die Entzinkung mit Fe-Pulver bei einem Zinkgehalt von etwa 30 g/l. Höhere Zinkgehalte als 100 g/l waren mit 20 %-iger Natronlauge bei der Entzinkung mit FeS nur deswegen nicht erreichbar, weil das gelöste Zink nicht in Lösung gehalten werden konnte, sondern teilweise als Zn(OH)₂ ausfiel, so daß die Natronlauge auch nach Beendigung der Entzinkung und damit nach Beendigung der Wasserstoffentwicklung milchig trüb blieb. Wieviel Zink in Lösung gehalten werden kann, hängt nicht nur von der Konzentration der Natronlauge ab sondern auch von dem in Kontakt mit der Luft gebildeten Sodagehalt. Durch die Zugabe von FeS kann die Geschwindigkeit der Zinkauflösung in Natron- oder Kalilauge im Vergleich zu dem dem Stand der Technik entsprechenden Verfahren, nach dem das aufzulösende Zink bzw. der zu entzinkende Schrott in Stahlkörben in die Lauge getaucht wird, bei sonst gleichen Bedingungen erheblich erhöht werden. Vor allem bei höheren Zinkgehalten über 10 g/l Zink der Laugen ist die durch Zugabe von FeS erreichbare Beschleunigung der Zinkauflösung sehr groß. Dies ist besonders wichtig für die galvanische Verzinkung in cyanidfreien alkalischen Elektrolyten mit separaten Löseabteilen für das Anodenzink, da in diesem Fall das Zink in dem zur Abscheidung benutzten Elektrolyten im für die Abscheidung festgelegten Temperaturbereich, d.h. in der Regel bei Raumtemperatur, gelöst werden muß. Wegen der unter diesen Bedingungen sehr langsamen Zinkauflösung sind die separaten Löseabteile sehr groß, oft nicht viel kleiner als das zugehörige Verzinkungsbad. Die Zugabe von FeS zum Anodenzink ermöglicht eine Reduzierung des Volumens der Löseabteile entsprechend der durch FeS erreichten Beschleunigung der Zinkauflösung.

Bei der Schrottentzinkung mit Natron- oder Kalilauge ist aus wirtschaftlichen Gründen die Einhaltung einer ausreichend kurzen Entzinkungszeit von ausschlaggebender Bedeutung. Dies wird in der Regel durch Erhöhung der Temperatur der zur Entzinkung eingesetzten Lauge und durch Begrenzung des Maximalgehaltes des in der Lauge gelösten Zinks erreicht. Durch die Zugabe von Eisensulfid kann die gleiche Entzinkungszeit bei niedrigerer Temperatur und höheren Zinkgehalten eingehalten werden. Da sich die Entzinkungsgeschwindigkeit durch eine Temperaturerhöhung von etwa 10 K verdoppelt, entspricht z.B. eine durch Eisensulfid-Zugabe erreichte Beschleunigung auf das 10-fache einer Erniedrigung der Laugentemperatur um etwas mehr als 30 K. Durch eine derartige Temperaturabsenkung können die Verdunstungs- und Wärmeverluste weitgehend reduziert und der Energiebedarf entsprechend abgesenkt werden. Bei geringem Energiebedarf ist die Einhaltung möglichst kurzer Entzinkungszeiten nicht von so ausschlaggebender Bedeutung wie bei hohem Energiebedarf. Wird in einer nachgeschalteten Stufe das gelöste Zink durch galvanische Abscheidung als Metall zurückgewonnen und dabei gleichzeitig die Natron- bzw. Kalilauge regeneriert, dann kann unter günstigen Umständen die durch Ausnutzung der Abwärme des gesamten Prozesses erreichbare Temperaturerhöhung der Lauge, d.h. in erster Linie durch die bei der elektrolytischen Zinkabscheidung freiwerdende Wärme, eine Schrottentzinkung auf wirtschaftliche Weise ohne zusätzliche Heizung ermöglichen. Lediglich zu Beginn muß die Lauge auf die Temperatur aufgeheizt werden, bei der die Wärmeverluste gerade durch die in die Lauge eingebrachte Abwärme ausgeglichen werden.

Es ist nicht erforderlich, daß das aufzulösende Zink in reiner Form vorliegt. Nach dem erfindungsgemäßen Verfahren wird das Zink auch aus verschiedenen Legierungen beschleunigt herausgelöst. Bei der Feuerverzinkung z.B. bildet sich im Übergangsbereich zwischen der Stahloberfläche und der Zinkschicht eine Eisen-Zink-Legierung, wobei der Eisengehalt mit zunehmendem Abstand von der Stahloberfläche abnimmt. Wie man der Tab. 2 entnehmen kann, wird auch aus diesen Zinklegierungen das Zink nach dem erfindungsgemäßen Verfahren beschleunigt herausgelöst. Das gleiche gilt, wenn der verzinkte Stahl einer Wärmebehandlung bei Temperaturen oberhalb des Schmelzpunktes des Zinks unterzogen wird, um die Legierungsschicht bis an die Oberfläche des beschichteten Stahls auszudehnen und dadurch den Korrosionsschutz und die Eigenschaften für Verschweißungen zu verbessern.

Als Ersatz für den durch chromatierte Zinkschichten erzielten Korrosionsschutz haben in den letzten Jahren galvanisch abgeschiedene Zink-Nickel-Legierungsschichten mit einem Nickelanteil von typischerweise bis zu ca. 15 % zunehmend an Bedeutung gewonnen. Aus derartigen Schichten kann das Zink nach dem erfindungsgemäßen Verfahren ähnlich schnell herausgelöst werden wie aus feuerverzinkten Schichten.

Wird das Zink aus Legierungsschichten herausgelöst, verbleibt nach der Zinkauflösung auf der Stahloberfläche eine locker anhaftende schwarze, pulverige Schicht aus Eisen bzw. Nickel. In dieser Schicht können noch unerwünscht große Zinkmengen enthalten sein, das durch Eisen- bzw. Nickelatome käfigartig umhüllt und dadurch vor dem Angriff der Entzinkungslösung geschützt ist. Derartige Schichten werden oft erst nach einer Expositionszeit abgelöst, die um ein Mehrfaches länger ist als die für die eigentliche Entzinkung benötigte Zeit, die durch das Ende der sichtbaren Wasserstoffentwicklung gekennzeichnet ist. Da diese schwarze, pulvrige Schicht, insbesondere die nach einer Zinkauflösung aus Zink-Nickel-Legierungen verbleibende Schicht, nur locker an der Stahloberfläche anhaftet, kann sie auch durch mechanische Erschütterungen entfernt werden, wie sie z.B. bei einer Durchführung der Entzinkung in einer rotierenden oder während der Entzinkung geschwenkten Trommel auftreten.

Noch schneller wird das Zink aus Beschichtungen herausgelöst, in denen es nicht in kompakter Form sondern als durch geeignete Bindemittel verbundenes Pulver vorliegt, wie es bei zinkhaltigen Korrosionsschutzanstrichen der Fall ist.

## Patentansprüche

1. Verfahren zur Auflösung von Zink in einer Natriumhydroxid (NaOH) oder Kaliumhydroxid (KOH) enthaltenden Lauge, **dadurch gekennzeichnet, daß** der Lauge mehr Eisensulfid zugesetzt wird, als in der Lauge gelöst werden kann.

2. Verfahren zur Auflösung von Zink in einer Natriumhydroxid (NaOH) oder Kaliumhydroxid (KOH) enthaltenden Lauge nach Anspruch 1, **dadurch gekennzeichnet, daß** als Eisensulfid vorzugsweise Eisen(II)sulfid (FeS) zugesetzt wird.

3. Verfahren zur Auflösung von Zink in einer Natriumhydroxid (NaOH) oder Kaliumhydroxid (KOH) enthaltenden Lauge nach Anspruch 1, **dadurch gekennzeichnet, daß** als Eisensulfid vorzugsweise Eisen(II)sulfid (FeS) in technischer Qualität zugesetzt wird.

4. Verfahren zur Auflösung von Zink nach Anspruch 1, **dadurch gekennzeichnet, daß** der pH-Wert der Lauge im Bereich zwischen 13 und 15,5 liegt.

5. Verfahren zur Auflösung von Zink nach Anspruch 1, **dadurch gekennzeichnet, daß** zur Auflösung von Zink in separaten Löseabteilen für die cyanidfreie, alkalische Verzinkung der für die Zinkabscheidung eingesetzte Elektrolyt verwendet wird.

6. Verfahren zur Auflösung von Zink nach Anspruch 1, **dadurch gekennzeichnet, daß** zumindest ein Teil des zugesetzten Eisensulfids in direktem Kontakt mit dem aufzulösenden Zink oder den verzinkten, mit Zinklegierungen beschichteten oder mit zinkhaltigen Korrosionsschutzanstrichen versehenen Stahlteilen steht.

7. Verfahren zur Auflösung von Zink nach Anspruch 1, **dadurch gekennzeichnet, daß** das aufzulösende Zink oder die verzinkten, mit Zinklegierungen beschichteten oder mit zinkhaltigen Korrosionsschutzanstrichen versehenen Stahlteile in einem Korb in die Lauge untergetaucht werden und daß die Oberfläche des Korbes aus einem gegen die Lauge beständigen, elektrisch leitenden Material mit geringer Wasserstoffüberspannung wie z.B. Stahl oder Nickel besteht.

8. Verfahren zur Auflösung von Zink nach Anspruch 7, **dadurch gekennzeichnet, daß** im Korb außer dem aufzulösenden Zink oder den verzinkten, mit Zinklegierungen beschichteten oder mit zinkhaltigen Korrosionsschutzanstrichen versehenen Stahlteilen Eisensulfid-Stücke enthalten sind, die so groß sind, daß sie nicht durch die Maschen des Korbes fallen können.

9. Verfahren zur Auflösung von Zink nach Anspruch 7, **dadurch gekennzeichnet, daß** das zugesetzte Eisensulfid auf den Boden des Behälters mit der zur Zinkauflösung verwendeten Lauge aufgebracht wird und daß der Korb mit dem aufzulösenden Zink oder den verzinkten, mit Zinklegierungen beschichteten oder mit zinkhaltigen Korrosionsschutzanstrichen versehenen Stahlteilen auf das zugegebene Eisensulfid aufgesetzt wird, so daß ein direkter elektrischer Kontakt zwischen dem Korb und dem zugesetzten Eisensulfid hergestellt wird.

10. Verfahren zur Auflösung von Zink nach Anspruch 1, **dadurch gekennzeichnet, daß** der Behälter mit der zur Zinkauflösung verwendeten Lauge zumindest an der mit der Lauge in Kontakt stehenden Oberfläche aus einem gegen die Lauge beständigen metallischen Werkstoff mit geringer Wasserstoffüberspannung besteht, wie z.B. Stahl oder Nickel.

11. Verfahren zur Auflösung von Zink nach Anspruch 10, **dadurch gekennzeichnet, daß** der Behälter, das aufzulösende Zink oder die verzinkten, mit Zinklegierungen beschichteten oder mit zinkhaltigen Korrosionsschutzanstrichen versehenen Stahlteile und zumindest ein Teil des zugegebenen Eisensulfids untereinander durch gegenseitige Berührung in elektrischem Kontakt stehen.

12. Verfahren zur Auflösung von Zink nach Anspruch 1, **dadurch gekennzeichnet, daß** die Temperatur der Lauge mindestens 20 °C und höchstens 100 °C beträgt.

13. Verfahren zur Auflösung von Zink nach Anspruch 1, **dadurch gekennzeichnet, daß** zwischen dem als Anode geschalteten, aufzulösenden Zink oder den verzinkten, mit Zinklegierungen beschichteten oder mit zinkhaltigen Korrosionsschutzanstrichen versehenen Stahlteilen und einer ein- oder mehrteiligen Kathode mit einer gegen die Lauge beständigen Oberfläche mit geringer Wasserstoffüberspannung, z.B. einer Stahl- oder Nickeloberfläche, eine Spannung von höchstens 2 V angelegt wird.

14. Verfahren zur Auflösung von Zink nach Anspruch 1, **dadurch gekennzeichnet, daß** Prozeßabwärme, z.B. aus einer nachgeschalteten galvanischen Zinkabscheidung, zur Erwärmung der Lauge genutzt wird.

15. Verfahren zur Auflösung von Zink nach Anspruch 1, **dadurch gekennzeichnet, daß** verzinkte, mit Zinklegierungen beschichtete oder mit zinkhaltigen Korrosionsschutzanstrichen versehenen Stahlteile in einem Behälter in die Lauge untergetaucht werden, daß die Lauge durch Öffnungen an der Behälteroberfläche in den Behälterinnenraum fließen kann und daß der Behälter während der Zinkauflösung mindestens einmal um eine horizontale Achse geschwenkt oder gedreht wird.
